# EUROPÄISCHE PATENTANMELDUNG

(11) **EP 4 477 632 A1**
(43) Veröffentlichungstag der Anmeldung: **18.12.2024**
(21) Anmeldenummer: 24175707.9
(22) Anmeldetag: 14.05.2024
(51) Int. Cl.: C04B 26/04, C04B 26/06, C04B 28/04, C04B 111/28, C04B 111/50, C04B 111/20

(54) **ZUSAMMENSETZUNG UND VERFAHREN ZUR HERSTELLUNG EINER LEICHTBAUPLATTE**

(30) Priorität: 30.05.2023 DE 102023002173
(71) Anmelder: STO SE & Co. KGaA, 79780 Stühlingen (DE)
(72) Erfinder: Pfeiffer, Christian, 89423 Gundelfingen (DE); Blaskovich, Samuel, 89537 Giengen (DE)
(74) Vertreter: Gottschalk, Matthias

(57) **Zusammenfassung**

Die Erfindung betrifft eine Zusammensetzung zur Herstellung einer Leichtbauplatte, enthaltend:
- 35-80 Gew.-%, vorzugsweise 40-75 Gew.-%, weiterhin vorzugsweise 45-70 Gew.-% eines Leichtfüllstoffs oder eines Leichtfüllstoffgemischs in multimodaler, beispielsweise in bimodaler, Partikelgrößenverteilung,
- 8-25 Gew.-%, vorzugsweise 10-24 Gew.-%, weiterhin vorzugsweise 12-22 Gew.-% eines Feinfüllstoffs oder eines Feinfüllstoffgemischs,
- 2-12 Gew.-%, vorzugsweise 3-10 Gew.-%, weiterhin vorzugsweise 4-8 Gew.-% eines, vorzugsweise als Feststoff vorliegenden, Polymerbindemittels oder Polymerbindemittelgemischs sowie
- 8 bis 24 Gew.-%, vorzugsweise 9-22 Gew.-%, weiterhin vorzugsweise 10-20 Gew.-% Wasser
jeweils bezogen auf das Gesamtgewicht der Ausgangsstoffe.

Ferner betrifft die Erfindung ein Verfahren zur Herstellung einer Leichtbauplatte unter Verwendung einer erfindungsgemäßen Zusammensetzung.

## Beschreibung

Die Erfindung betrifft eine Zusammensetzung zur Herstellung einer Leichtbauplatte. Darüber hinaus betrifft die Erfindung ein Verfahren zur Herstellung einer Leichtbauplatte unter Verwendung einer erfindungsgemäßen Zusammensetzung.

### Stand der Technik

Leichtbauplatten finden im Baubereich beispielsweise als Trockenbauplatte oder als Putzträgerplatte Einsatz. Sie können in der Regel sowohl im Innenbereich als auch im Außenbereich eingesetzt werden. Die Hauptbestandteile einer Leichtbauplatte umfassen mindestens einen Leichtfüllstoff sowie ein Bindemittel zum Binden des Leichtfüllstoffs.

Aus der EP 3 072 859 A1 geht beispielhaft eine als Putzträgerplatte einsetzbare Bauplatte hervor, die Epoxidharz sowie ein poröses partikuläres anorganisches Füllstoffmaterial umfasst. Die Bauplatte weist eine hohe mechanische Festigkeit bei zugleich geringem Gewicht auf. Zur Herstellung der Bauplatte wird ein Verfahren vorgeschlagen, bei dem das Epoxidharz und das poröse partikuläre anorganische Füllstoffmaterial vermischt und in ein Formbehältnis eingebracht werden. Die im Formbehältnis vorliegende Mischung wird anschließend mit Wärme und Pressdruck beaufschlagt, wobei über den Pressdruck mindestens ein Teil des porösen partikulären anorganischen Füllstoffmaterials in Bruchstücke zerkleinert wird, vor und/oder während des Aushärtens des Epoxidharzes. Nach dem Aushärten wird die Bauplatte aus dem Formbehältnis genommen.

Da Epoxidharz ein reaktives Bindemittel ist, das vernetzend härtet, sind mit Epoxidharz gebundene Leichtbauplatten in der Regel vergleichsweise steif. Aufgrund dessen besteht eine erhöhte Bruchgefahr. Zudem sind Epoxidharze oft nicht UV-beständig, so dass epoxidharzgebundene Leichtbauplatten dazu neigen, zu vergilben, zu verspröden und/oder zu kreiden. Um dem entgegenzuwirken, können UV-Stabilisatoren zugefügt werden und/oder die Leichtbauplatten können mit einer Schutzschicht versehen werden. Dies erhöht jedoch den Herstellungsaufwand solcher Platten.

Anstelle von Epoxidharz kann auch ein mineralisches Bindemittel, beispielsweise Zement, verwendet werden. Mineralisch gebundene Leichtbauplatten, insbesondere Zementplatten, sind jedoch ebenfalls steif und damit spröde. Demzufolge besteht auch bei mineralisch gebundenen Leichtbauplatten in der Regel eine erhöhte Bruchgefahr. Zudem weisen sie ein höheres Gewicht als organisch gebundene Leichtbauplatten auf.

Gegenüber mineralisch gebundenen Leichtbauplatten weisen rein organisch gebundene Leichtbauplatten zwar eine deutlich größere Elastizität auf, aufgrund des hohen Anteils an organischen Bestandteilen ist jedoch das Brandverhalten häufig unzureichend. Rein organisch gebundene Leichtbauplatten werden daher in der Regel den brennbaren Baustoffen, das heißt der Baustoffklasse B nach DIN 4102-1 zugeordnet. Um Schwerentflammbarkeit oder Nichtbrennbarkeit zu erreichen, bedarf es eines erhöhten Rezepturaufwands, beispielsweise durch Zugabe eines Flammschutzmittels.

Aus der DE 197 08 991 A1 ist ein Bauelement bekannt, das aus geschäumtem Glas und einem Bindemittelgemisch hergestellt wird, das mindestens 10 Masse-% Zement sowie mindestens 10 Masse-% Dispersion enthält. Aufgrund des relativ hohen Anteils an Dispersion soll das Bauelement eine ausreichend hohe Elastizität aufweisen. Zur weiteren Verbesserung der Elastizität wird in dieser Druckschrift vorgeschlagen, den Ausgangsstoffen expandiertes Polystyrol zuzugeben. Zur Erhöhung der Biegefestigkeit wird darüber hinaus die Zugabe von Fasern vorgeschlagen.

Ausgehend von dem vorstehend genannten Stand der Technik liegt der vorliegenden Erfindung die Aufgabe zugrunde, die Produkteigenschaften einer Leichtbauplatte weiter zu verbessern, insbesondere im Hinblick auf ihre Elastizität, ihr Brandverhalten sowie ihre UV-Stabilität. Zugleich soll der Rezepturaufwand so gering wie möglich gehalten werden.

Zur Lösung der Aufgabe werden die Zusammensetzung mit den Merkmalen des Anspruchs 1 sowie das Verfahren mit den Merkmalen des Anspruchs 14 vorgeschlagen. Vorteilhafte Weiterbildungen der Erfindung sind den jeweiligen Unteransprüchen zu entnehmen.

### Offenbarung der Erfindung

Vorgeschlagen wird eine Zusammensetzung zur Herstellung einer Leichtbauplatte, enthaltend:
- 35-80 Gew.-%, vorzugsweise 40-75 Gew.-%, weiterhin vorzugsweise 45-70 Gew.-% eines Leichtfüllstoffs oder eines Leichtfüllstoffgemischs in multimodaler, beispielsweise in bimodaler, Partikelgrößenverteilung,
- 8-25 Gew.-%, vorzugsweise 10-24 Gew.-%, weiterhin vorzugsweise 12-22 Gew.-% eines Feinfüllstoffs oder eines Feinfüllstoffgemischs,
- 2-12 Gew.-%, vorzugsweise 3-10 Gew.-%, weiterhin vorzugsweise 4-8 Gew.-% eines, vorzugsweise als Feststoff vorliegenden, Polymerbindemittels oder Polymerbindemittelgemischs sowie
- 8 bis 24 Gew.-%, vorzugsweise 9-22 Gew.-%, weiterhin vorzugsweise 10-20 Gew.-% Wasser,
jeweils bezogen auf das Gesamtgewicht der Ausgangsstoffe.

Das in der Zusammensetzung enthaltene Polymerbindemittel bzw. Polymerbindemittelgemisch trägt dazu bei, dass eine aus der Zusammensetzung hergestellte Leichtbauplatte eine gewisse Elastizität aufweist. Diese führt zu einem verbesserten Bruchverhalten, insbesondere im Vergleich zu zementgebundenen Leichtbauplatten. Da der Bindemittelanteil im Vergleich zu herkömmlichen, organisch gebundenen Leichtbauplatten eher gering ist, weist eine aus der Zusammensetzung hergestellte Leichtbauplatte zudem ein verbessertes Brandverhalten auf.

Die Elastizität einer aus der Zusammensetzung hergestellten Leichtbauplatte ist jedoch nicht allein auf das enthaltene Polymerbindemittel zurückzuführen. Hauptgrund für die Elastizität ist vielmehr die Multimodalität des enthaltenen Leichtfüllstoffs in Verbindung mit dem Feinfüllstoff. Diese ermöglicht eine hohe Partikel-Packungsdichte, da sich bei der Herstellung der Leichtbauplatte die feineren Partikel zwischen die gröberen Partikel legen. Überraschenderweise hat sich gezeigt, dass die höhere Partikel-Packungsdichte zu einer signifikant höheren Elastizität einer aus der Zusammensetzung hergestellten Leichtbauplatte führt. Das heißt, dass die Leichtbauplatte deutlich weniger steif und spröde ist, so dass die Bruchgefahr minimiert ist. Aufgrund ihrer hohen Elastizität kann eine aus der vorgeschlagenen Zusammensetzung hergestellte Leichtbauplatte zum Ausgleich von Unebenheiten eingesetzt und sogar auf einer gekrümmten Oberfläche aufgebracht werden.

Die hohe Partikel-Packungsdichte kann als "mechanischer Weichmacher" betrachtet werden. Da der Weichmachereffekt rein mechanisch erzielt wird, geht er über die Zeit, beispielsweise durch chemische Abbauprozesse, auch nicht verloren.

Einen Beitrag zur hohen Partikel-Packungsdichte leistet im Übrigen der in der vorgeschlagenen Zusammensetzung enthaltene Feinfüllstoff, da dieser die kleineren Zwickelräume bzw. verbleibenden Lücken füllt. Da sich der in der Zusammensetzung enthaltene Feinfüllstoff in die Lücken bzw. Hohlräume setzt, ist der Bindemittelbedarf zum Füllen der Lücken bzw. Hohlräume gering. Das heißt, dass weniger Polymerbindemittel benötigt wird bzw. der enthaltene geringe Anteil an Polymerbindemittel effizient genutzt wird.

Die hohe Elastizität einer aus der vorgeschlagenen Zusammensetzung hergestellten Leichtbauplatte ist demnach auf mehrere Faktoren zurückzuführen, und zwar - in der Reihenfolge ihrer Bedeutung nach - auf:
- die Multimodalität des enthaltenen Leichtfüllstoffs bzw. Leichtfüllstoffgemischs zur Erzielung einer hohen Partikel-Packungsdichte,
- den Feinfüllstoffanteil zur weiteren Erhöhung der Partikel-Packungsdichte und
- den Polymerbindemittelanteil als "elastischem Kleber".

Die vorgeschlagene Zusammensetzung ist bevorzugt epoxidharzfrei. Das heißt, dass das Bindemittelgemisch kein Epoxidharz enthält. Die Zusammensetzung ermöglicht somit die Herstellung einer epoxidharzfreien Leichtbauplatte. Eine aus der Zusammensetzung hergestellte epoxidharzfreie Leichtbauplatte weist demzufolge eine ausreichende UV-Stabilität auf, so dass auf die Zugabe von UV-Stabilisatoren und/oder auf das Aufbringen einer Schutzschicht verzichtet werden kann. Dadurch sinkt zugleich der Rezepturaufwand. Auch die Zugabe von expandiertem Polystyrol zur Erhöhung der Elastizität der Leichtbauplatte ist entbehrlich.

Der in der Zusammensetzung enthaltene Leichtfüllstoff bzw. das in der Zusammensetzung enthaltene Leichtfüllstoffgemisch liegt in mindestens zwei Größenfraktionen vor. Die Partikelgrößenverteilung ist somit zumindest bimodal. Bevorzugt beträgt die Partikelgröße in einer ersten Größenfraktion (A) 0,3-1,5 mm, vorzugsweise 0,4-1,2 mm, weiterhin vorzugsweise 0,5-1,0 mm, und die Partikelgröße in einer zweiten Größenfraktion (B) beträgt 0,8-2,5 mm, vorzugsweise 0,9-2,2 mm, weiterhin vorzugsweise 1,0-2,0 mm. Vorteilhafterweise ist die Partikelgröße der Größenfraktion (A) um den Faktor 0,5 kleiner als die der gröberen Größenfraktion (B), so dass ein deutlicher Größenunterschied vorliegt. Dadurch ist sichergestellt, dass sich die feineren Partikel in die Zwickelräume zwischen den gröberen Partikeln setzen können. Die Partikelgröße kann durch Siebanalyse, beispielsweise gemäß DIN 66165-1:2016-08 oder DIN 66165-1:2022-06, ermittelt werden.

Die Größenfraktionen können einen sich überschneidenden Bereich aufweisen. Der Überschneidungsbereich ist in diesem Fall bevorzugt kleiner als der Bereich, der jeweils außerhalb des Überschneidungsbereichs liegt.

Bevorzugt beträgt der Anteil der ersten Größenfraktion (A) 20-40 Gew.-%, vorzugsweise 24-36 Gew.-%, weiterhin vorzugsweise 26-34 Gew.-%, und der Anteil der zweiten Größenfraktion (B) 20-40 Gew.-%, vorzugsweise 24-36 Gew.-%, weiterhin vorzugsweise 26-34 Gew.-% bezogen auf das Gesamtgewicht der Ausgangsstoffe der Zusammensetzung.

Ferner bevorzugt beträgt das Massen-Verhältnis der ersten Größenfraktion (A) zur zweiten Größenfraktion (B) 1:0,5 bis 1:2, vorzugsweise 1:0,7 bis 1:1,4, weiterhin vorzugsweise 1:1. Dadurch ist sichergestellt, dass ausreichend viele kleinere Partikel vorhanden sind, die sich in das Zwickelvolumen zwischen den größeren Partikeln setzen, um die gewünschte hohe Partikel-Packungsdichte zu erzielen.

Des Weiteren bevorzugt weist die erste Größenfraktion (A) eine mittlere Partikelgröße (D50) von 0,5-1,0 mm, vorzugsweise von 0,55-0,9 mm, weiterhin vorzugsweise von 0,6-0,8 mm auf. Der D90-Wert der ersten Größenfraktion (A) liegt vorzugsweise zwischen 0,8 und 1,0 mm. Der D10-Wert liegt vorzugsweise zwischen 0,5 und 0,7 mm.

Die zweite Größenfraktion (B) weist bevorzugt eine mittlere Partikelgrößenverteilung (D50) von 1,0-2,0 mm, vorzugsweise von 1,1-1,9 mm, weiterhin vorzugsweise von 1,2-1,8 mm auf. Der D90-Wert liegt vorzugsweise zwischen 1,75 und 2,0 mm. Der D10-Wert liegt vorzugsweise zwischen 1,0 und 1,25 mm.

Der D50-Wert wird auch Halbwertskorngröße oder Medianwert genannt. Er gibt die mittlere Partikelgröße einer Größenfraktion an, so dass der Gewichtsanteil der Partikel, die größer als der D50-Wert sind, gleich dem Gewichtsanteil der Partikel ist, die kleiner als der D50-Wert sind. Beim D90-Wert beträgt der Gewichtsanteil der Partikel, die kleiner als der D90-Wert sind, 90 Gew.-% und beim D10-Wert beträgt der Gewichtsanteil der Partikel, die kleiner sind als der D10-Wert, 10 Gew.-%, jeweils bezogen auf das Gesamtgewicht der Partikel der jeweiligen Größenfraktion. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/ -durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden, das mit dem Leichtfüllstoff bzw. mit der jeweiligen Größenfraktion ausgeliefert wird.

Bei der vorgeschlagenen Zusammensetzung beträgt vorzugsweise das Verhältnis des D50-Werts der Größenfraktion (A) zum D50-Wert der Größenfraktionen (B) 1,5 bis 4, vorzugsweise 1,75 bis 3, weiterhin vorzugsweise 1,8 bis 2,5. Das heißt, dass bevorzugt der D50-Wert der Größenfraktion (A) nur halb so groß wie der D50-Wert der Größenfraktion (B) ist, um die gewünschte hohe Partikel-Packungsdichte zu erzielen.

Der enthaltene Leichtfüllstoff bzw. das enthaltene Leichtfüllstoffgemisch kann insbesondere über seine Dichte definiert werden. Dabei gibt es zwischen verschiedenen Dichten zu unterscheiden, nämlich der Rohdichte nach EN 1097-6 (scheinbare Rohdichte, Kornrohdichte), der Schüttdichte nach EN 1097-3 und der Stampfdichte nach ISO 787-11.

Die Rohdichte hängt vom Porenvolumen eines Leichtfüllstoffs bzw. eines Leichtfüllstoff-Partikels ab. Bevorzugt weist die erste Größenfraktion (A) eine Rohdichte nach EN 1097-6 < 800 kg/m³, vorzugsweise < 600 kg/m³, weiterhin vorzugsweise < 500 kg/m³ auf. Alternativ oder ergänzend wird vorgeschlagen, dass die zweite Größenfraktion (B) eine Rohdichte nach EN 1097-6 < 700 kg/m³, vorzugsweise < 500 kg/m³, weiterhin vorzugsweise < 400 kg/m³ aufweist.

Die Schüttdichte bezieht sich auf die Dichte einer losen Schüttung bzw. eines Haufwerks des Leichtfüllstoffs, das heißt einer Vielzahl von Leichtfüllstoff-Partikel. Sie wird durch das zwischen den einzelnen Partikeln verbleibende Zwickelvolumen bestimmt. Bevorzugt weist die erste Größenfraktion (A) eine Schüttdichte nach EN 1097-3 < 600 kg/m³, vorzugsweise < 500 kg/m³, weiterhin vorzugsweise < 300 kg/m³ auf. Alternativ oder ergänzend wird vorgeschlagen, dass die zweite Größenfraktion (B) eine Schüttdichte nach EN 1097-3 < 500 kg/m³, vorzugsweise < 400 kg/m³, weiterhin vorzugsweise < 250 kg/m³ aufweist.

Für die gewünschte hohe Partikel-Packungsdichte ist zudem die Schüttdichte des Leichtfüllstoffs bzw. Leichtfüllstoffgemischs nach dem Mischen der verschiedenen Größenfraktionen von Bedeutung. Bevorzugt ist die Schüttdichte bei einer Mischung aus den Größenfraktionen (A) und (B) - bei gleichen Gewichtsanteilen - größer als die Schüttdichte der Einzelfraktionen, insbesondere größer als die Schüttdichte der feineren Einzelfraktion. Das heißt, dass die Schüttdichte der Mischung selbst größer als die Schüttdichte der feineren Einzelfraktion, vorliegend die Größenfraktion (A), ist.

Da der in einer Leichtbauplatte enthaltene Leichtfüllstoff nicht als lose Schüttung vorliegt, sondern zumindest teilweise verdichtet und vermischt mit anderen Stoffen, kommt ferner der Stampfdichte eine besondere Bedeutung zu. Bevorzugt weist die erste Größenfraktion (A) eine Stampfdichte nach ISO 787-11 < 660 kg/m³, vorzugsweise < 550 kg/m³, weiterhin vorzugsweise < 450 kg/m³ auf. Alternativ oder ergänzend wird vorgeschlagen, dass die zweite Größenfraktion (B) eine Stampfdichte nach ISO 787-11 < 550 kg/m³, vorzugsweise < 440 kg/m³, weiterhin vorzugsweise < 360 kg/m³ aufweist.

Zur Bestimmung des Leichtfüllstoffs einer erfindungsgemäßen Leichtbauplatte kann darüber hinaus der sogenannte Hausner-Faktor herangezogen werden. Hierbei handelt es sich um eine dimensionslose, physikalische Kennzahl zur Charakterisierung von schüttfähigen Feststoffen, welche die Volumenverminderung durch Rütteln oder Stampfen berücksichtigt. Zur Berechnung des Hausner-Faktors wird der Quotient aus Schüttdichte und Stampfdichte bzw. dem Schüttvolumen und dem Stampfvolumen gebildet. Bevorzugt liegt der Hausner-Faktor des Gemischs aus den Größenfraktionen (A) und (B) zwischen 1,01 und 1,30, vorzugsweise zwischen 1,02 und 1,20, weiterhin vorzugsweise zwischen 1,04 und 1,10. Je kleiner der Hausner-Faktor ist, desto leichter und dichter lassen sich die Leichtfüllstoffe packen, desto weniger Zwickelräume verbleiben nach dem Verdichten zwischen den Leichtfüllstoff-Partikel. Ein Hausner-Faktor unter 1 sollte jedoch vermieden werden, da dies ein Hinweis auf eine ungenügende Bruchfestigkeit der Leichtfüllstoff-Partikel ist.

Zur Minimierung der Bruchgefahr wird vorgeschlagen, dass die mittlere Kornfestigkeit nach DIN EN 13055-1 der Leichtfüllstoff-Partikel mindestens 1,2 N/mm², vorzugsweise 1,6 N/mm², weiterhin vorzugsweise 1,8 N/mm² beträgt. Ferner wird vorgeschlagen, dass Leichtfüllstoff-Partikel verwendet werden, die zumindest annähernd kugelförmig sind. Denn die Kugelform erhöht die Druck- und damit Bruchfestigkeit der einzelnen Partikel.

In Weiterbildung der Erfindung wird vorgeschlagen, dass der enthaltene Leichtfüllstoff oder das enthaltene Leichtfüllstoffgemisch in mindestens einer weiteren Größenfraktionen vorliegt, die feinteiliger als die Größenfraktion (A) und/oder grobteiliger als die Größenfraktion (B) ist. Die weitere Größenfraktion führt zu einer weiteren Optimierung der Packungsdichte des enthaltenen Leichtfüllstoffs bzw. Leichtfüllstoffgemischs, so dass die Elastizität einer aus der Zusammensetzung hergestellten Leichtbauplatte weiter steigt. Beispielsweise kann der Leichtfüllstoff bzw. das Leichtfüllstoffgemisch in einer weiteren Größenfraktion (C) vorliegen, die feinteiliger als die Größenfraktion (A) ist. Alternativ oder ergänzend kann der Leichtfüllstoff bzw. das Leichtfüllstoffgemisch in einer weiteren Größenfraktion (D) vorliegen, die grobteiliger als die Größenfraktion (B) ist.

Bevorzugt beträgt der Anteil der mindestens einen weiteren Größenfraktion weniger als 25 Gew.-%, vorzugsweise weniger als 20 Gew.-%, weiterhin vorzugsweise weniger als 10 Gew.-% bezogen auf das Gesamtgewicht des in der Zusammensetzung enthaltenen Leichtfüllstoffs oder der in der Zusammensetzung enthaltenen Leichtfüllstoffmischung.

Als Leichtfüllstoff eignen sich grundsätzlich alle möglichen geblähten Partikel. Bevorzugt ist bzw. sind in der vorgeschlagenen Zusammensetzung Blähglas, Blähton, Blähschiefer, geschäumtes Blähglas, Blähglasgranulate, Blähperlite, Blähglimmer, insbesondere geblähtes oder geschäumtes Vermiculit, Hohlglaskugeln, Hohlkeramikkugeln, Lavaschlacke, Tuff und/oder Bims als Leichtfüllstoff enthalten.

Als Feinfüllstoff kann bzw. können ein silikatischer, karbonatischer, oxidischer, hydroxidischer und/oder sulfatischer Füllstoff, beispielsweise Quarz, Cristobalit, Perlit, insbesondere Rohperlit, Ettringit, Calciumcarbonat, Calcit, Kalkstein, Marmor, Dolomit, Aluminiumhydroxid und/oder Erdalkalisulfate, enthalten sein.

Bevorzugt weist der enthaltene Feinfüllstoff bzw. die enthaltene Feinfüllstoffmischung eine mittlere Partikelgröße (D50) von 1-100 µm, vorzugsweise 2-60 µm, weiterhin vorzugsweise von 4-40 µm auf. Der Feinfüllstoff kann sich somit optimal in die Lücken zwischen den Leichtfüllstoffpartikeln setzen.

Ferner bevorzugt weist ein überwiegender Teil des enthaltenen Feinfüllstoffs bzw. der enthaltenen Feinfüllstoffmischung eine Mohshärte ≤4, vorzugsweise ≤ 3,5, auf. Das heißt, dass vorzugsweise der Feinfüllstoff relativ "weich" ist bzw. eine gewisse Nachgiebigkeit aufweist. Er wird demnach weniger schnell zwischen den größeren Partikeln zerrieben und kann als eine Art Feststoffschmierung dienen.

Für die Auswahl des Feinfüllstoffs spielt auch der PCS-Wert eine Rolle. PCS steht für "Pouvoir Calorifique Supérieur" und bedeutet so viel wie Brutto-Verbrennungswärme. Der PCS-Wert wird bei der Berechnung der Brennbarkeit von Baustoffen herangezogen. Gemessen wird der PCS-Wert nach DIN EN ISO 1716 in einem Bombenkalorimeter, beispielsweise einem IKA C 2000. Die Einheit ist MJ/kg.

Flammschutzmittel weisen einen negativen PCS-Wert bzw. eine negative Brutto-Verbrennungswärme auf. Das heißt, dass sie bei der Verbrennung Energie aufnehmen bzw. verbrauchen und nicht freisetzen.

Bevorzugt weist der enthaltene Feinfüllstoff bzw. die enthaltene Feinfüllstoffkombination zumindest in Teilen einen negativen PCS-Wert auf, vorzugsweise beträgt der PCS-Wert < -0,5 MJ/kg, weiterhin vorzugsweise < -0,8 MJ/kg. Bevorzugt beträgt der Anteil an Feinfüllstoff mit einem negativen PCS-Wert mehr als 40 Gew.-%, vorzugsweise mehr als 50 Gew.-%, weiterhin vorzugsweise mehr als 60 Gew.-%, bezogen auf das Gesamtgewicht der enthaltenen Feinfüllstoffe.

Der Feinfüllstoff mit negativem PCS-Wert dient zugleich als Flammschutzmittel, so dass auf die separate Zugabe eines Flammschutzmittels verzichtet werden kann. Besonders bevorzugt werden Ettringit, Calciumcarbonat, Calcit, Kalkstein, Marmor, Dolomit und/oder Aluminiumhydroxid als Feinfüllstoff eingesetzt. Calciumcarbonat weist beispielsweise - je nach Typ, Reinheit und Beschaffenheit -einen PCS-Wert zwischen -0,8 und -1,21 auf. Der PCS-Wert von Aluminiumhydroxid liegt - je nach Reinheit und Beschaffenheit - zwischen -0,52 und -1,1. Ettringit weist einen PCS-Wert von -0,83 auf. Des Weiteren können Perlit und/oder Vermiculit als Feinfüllstoff eingesetzt werden. Durch ihren Wassergehalt weise sie jeweils einen negativen PCS-Wert auf. Beispielsweise können Perlite mit einer Partikelgröße < 75 µm genutzt werden, die bei der Herstellung geblähter Perlite als Ausschuss anfallen und ausgesiebt werden. Anstelle den Ausschuss zu deponieren, können sie durch Verwendung als Feinfüllstoff einer Nutzung zugeführt werden.

Alternativ oder ergänzend wird vorgeschlagen, dass Zement, insbesondere Portlandzement, als Feinfüllstoff enthalten ist, da Zement in der Regel stark hygroskopisch ist. Das heißt, dass sich Wasser, das der Zusammensetzung zum Anmachen zugegeben wird, am Zement anlagert und somit den PCS-Wert günstig beeinflusst. Die zugegebene Wassermenge reicht jedoch nicht aus, um die Hydratisierung bzw. das Abbinden des Zements abzuschließen oder überhaupt erst in Gang zu setzen. Das heißt, dass kein herkömmliches Abbinden des Zements stattfindet, so dass dieser lediglich die Funktion eines Feinfüllstoffs und nicht die eines Bindemittels besitzt.

Sofern die Zusammensetzung Zement bzw. eine Zementmischung als Feinfüllstoff enthält, handelt es sich vorzugsweise um einen Portlandzement, insbesondere einen Portlandzement nach EN 197. Die besten Ergebnisse konnten mit einem Portlandzement CEM I 52,5R erzielt werden.

Aus Gründen der Nachhaltigkeit kann die vorgeschlagene Zusammensetzung auch Stäube, die bei der Produktion von Leichtbauplatten beim Sägen und/oder Fräsen anfallen, als Feinfüllstoff enthalten. Da derartige Stäube Reste organischer Bindemittel aufweisen können, die sich negativ auf den Brandschutz auswirken würden, gelangen sie vorzugsweise nur in Kombination mit einem Feinfüllstoff mit negativem PCS-Wert zum Einsatz, wobei der Anteil des Feinfüllstoffs mit negativem PCS-Wert immer überwiegen sollte.

Als Polymerbindemittel kann bzw. können insbesondere Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten als Polymerbindemittel enthalten sein. Demgemäß gelangt insbesondere ein Polymerbindemittel zum Einsatz, bei dem die in Wasser dispergierten oder dispergierbaren Polymere aus gleichen oder verschiedenen Monomeren gebildet sind, wobei mindestens ein Monomer ein Acrylsäureester, Methacrylsäureester, Acrylsäure, Methacrylsäure, Vinylacetat, Vinylchlorid, Versatat, Acrylnitril oder eine vinylaromatische Verbindung darstellt. Besonders bevorzugt wird ein Copolymer aus Vinylacetat und Ethylen als Polymerbindemittel eingesetzt.

Es hat sich gezeigt, dass die vorstehend genannten Polymerbindemittel grundsätzlich als wässrige Dispersion eingesetzt werden können, die Verwendung des jeweiligen Polymerbindemittels in Form eines trockenen Dispersionspulvers jedoch zu besseren Ergebnissen hinsichtlich der Eigenschaften einer aus der Zusammensetzung hergestellten Leichtbauplatte führt, und zwar insbesondere im Hinblick auf ihre Elastizität bzw. ihr Bruchverhalten. Ein Grund hierfür könnte sein, dass ein Polymerbindemittel in Pulverform - im Unterschied zu einer Polymerdispersion - sich nicht so gleichmäßig verteilt und demzufolge weniger, aber dafür stärkere Bindemittelbrücken zwischen den Füllstoffpartikeln ausbildet.

Zur Lösung der eingangs genannten Aufgabe wird darüber hinaus ein Verfahren zur Herstellung einer epoxidharzfreien Leichtbauplatte aus einer erfindungsgemäßen Zusammensetzung vorgeschlagen. Zunächst wird die erfindungsgemäße Zusammensetzung hergestellt, wobei die folgenden Schritte ausgeführt werden:
a) Vorlegen eines Leichtfüllstoffs oder einer Leichtfüllstoffmischung in mindestens zwei unterschiedlichen Größenfraktionen,
b) Mischen der Größenfraktionen unter Zugabe von Wasser,
c) Zugabe eines Polymerbindemittels oder einer Polymerbindemittelmischung, vorzugsweise in Pulverform,
d) Zugabe eines Feinfüllstoffs oder einer Feinfüllstoffmischung,
e) Mischen der Ausgangsstoffe.

Zur Herstellung der Leichtbauplatte wird dann die Zusammensetzung in eine Form eingefüllt und in der Form unter Einwirkung von Druck und Wärme zu einer Platte verpresst.

Eine nach dem Verfahren hergestellte Leichtbauplatte weist eine hohe Elastizität und damit eine deutlich verringerte Bruchneigung auf. Durch den geringen Anteil des Polymerbindemittels weist die Leichtbauplatte zudem eine verbessertes Brandverhalten auf. Sofern ein Feinfüllstoff oder eine Feinfüllstoffmischung mit negativem PCS-Wert eingesetzt wird, kann das Brandverhalten weiter optimiert werden. Beispielsweise kann Nichtbrennbarkeit A2-s1, d0 nach EN 13501-1 erreicht werden, ohne dass weitere chemische Flammschutzmittel wie halogenierte, stickstoffbasierte oder Organophosphor-Flammschutzmittel zugegeben werden müssen. Der Rezepturaufwand ist demnach vergleichsweise gering. Die wenigen Ausgangsstoffe vereinfachen die Herstellung der Leichtbauplatte. Die Minimierung erdölbasierter organischer Bindemittel und der Verzicht auf Epoxidharz als Bindemittel erhöhen die Nachhaltigkeit der Leichtbauplatte. Denn Epoxidharz wird in der Regel aus Asien bezogen, so dass durch den Verzicht auf Epoxidharz lange Lieferwege vermieden werden.

Bevorzugt wird die Zusammensetzung in der Form bei einer Temperatur von 80-160°C, vorzugsweise 100-160°C, weiterhin vorzugsweise 130-160°C, verpresst.

Des Weiteren bevorzugt wird die Zusammensetzung in der Form mit einem Kompressionsfaktor von 50-75% verpresst. Nach dem Verpressen kann die Leichtbauplatte zum Abkühlen aus der Form genommen werden. Dies ermöglicht kurze Taktzeiten beim Verpressen. Nach dem Entformen wird vorzugsweise der Leichtbauplatte eine Ruhe- bzw. Reifezeit von etwa 24 Stunden gelassen.

Als weiterbildende Maßnahme wird vorgeschlagen, dass zumindest eine Oberfläche der Leichtbauplatte mit einem Armierungsgewebe kaschiert wird. Das Armierungsgewebe trägt zur Gesamtstabilität der Leichtbauplatte bei. Bei der Herstellung der Leichtbauplatte kann das Armierungsgewebe bereits in die Form eingelegt werden und mit der dann in die Form eingebrachten Zusammensetzung verpresst werden. Das Armierungsgewebe kann aber auch erst nachträglich aufgebracht werden.

Bevorzugt wird ein Armierungsgewebe mit einem Flächengewicht > 110 g/m² und/oder einer maximalen Maschenweite kleiner 8 mm x 8 mm, vorzugsweise kleiner 6 mm x 6 mm, weiterhin vorzugsweise kleiner 5 mm x 6 mm verwendet.

Nachfolgend werden zwei Beispiele einer erfindungsgemäßen Zusammensetzung zur Herstellung einer Leichtbauplatte sowie zwei Referenzbeispiele angegeben und verglichen. Der Vergleich zeigt die verbesserten Produkteigenschaften einer aus einer erfindungsgemäßen Zusammensetzung hergestellten Leichtbauplatte.

Für die Ausführungs- und Referenzbeispiele wurden Blähglas-Fraktionen der Firma Liaver GmbH & Co. KG mit den in der nachfolgenden Tabelle aufgeführten Parametern verwendet:

| | Fraktion (A) | Fraktion (B) |
|---|---|---|
| D10 [mm] | 0,6 | 1,1 |
| D50 [mm] | 0,8 | 1,6 |
| D90 [mm] | 0,9 | 1,9 |
| Rohdichte [kg/m³] | 455 | 355 |
| Schüttdichte [kg/m³] | 245 | 218 |

Die Fraktionsgrenzen der Fraktion (A) lagen bei 0,5 mm und 1,0 mm, die Fraktionsgrenzen der Fraktion (B) bei 1,0 mm und 2,0 mm. Die Schüttdichte der Mischung aus den Fraktionen (A) und (B) betrug - bei gleichen Gewichtsanteilen - etwa 260 kg/m³.

Im Referenzbeispiel - mit nur einer Fraktion - lagen die Grenzen bei 0,5 mm und 2,0 mm, wobei das Blähglas einen D10-Wert von 0,7 mm, einen D50-Wert von 1,3 mm, einen D90-Wert von 1,8 mm, eine Rohdichte von 390 kg/m³ und eine Schüttdichte von 232 kg/m³ aufwies.

Ferner wurden gängige Polymerbindemittel der Firma Wacker Chemie AG, Portlandzement CEM I 52,5R der Firma Schwenk Zement KG sowie Kalksteinmehl von Omya mit D50-Wert im Bereich 12 µm verwendet.

### Ausführungsbeispiel 1

| | | |
|---|---|---|
| 30,0 | Gew.-% | Blähglas in einer Korngrößenfraktion (A) 0,5-1,0 mm |
| 30,0 | Gew.-% | Blähglas in einer Korngrößenfraktion (B) 1,0-2,0 mm |
| 6,0 | Gew.-% | Polymerbindemittel auf Basis von Vinylacetat und Ethylen (Feststoff) |
| 18,0 | Gew.-% | Portlandzement als Feinfüllstoff |
| 16,0 | Gew.-% | Wasser |
| 100 | Gew.-% | |

### Ausführungsbeispiel 2

| | | |
|---|---|---|
| 30,0 | Gew.-% | Blähglas in einer Korngrößenfraktion (A) 0,5-1,0 mm |
| 30,0 | Gew.-% | Blähglas in einer Korngrößenfraktion (B) 1,0-2,0 mm |
| 6,0 | Gew.-% | Polymerbindemittel auf Basis von Vinylacetat und Ethylen (Feststoff) |
| 18,0 | Gew.-% | CaCO3 als Feinfüllstoff |
| 16,0 | Gew.-% | Wasser |
| 100 | Gew.-% | |

### Referenzbeispiel 1

| | | |
|---|---|---|
| 60,0 | Gew.-% | Blähglas in einer Korngrößenfraktion 0,5-2,0 mm |
| 6,0 | Gew.-% | Polymerbindemittel auf Basis von Vinylacetat und Ethylen (Feststoff) |
| 18,0 | Gew.-% | Portlandzement |
| 16,0 | Gew.-% | Wasser |
| 100 | Gew.-% | |

### Referenzbeispiel 2

| | | |
|---|---|---|
| 35,0 | Gew.-% | Blähglas in einer Korngrößenfraktion (A) 0,5-1,0 mm |
| 35,0 | Gew.-% | Blähglas in einer Korngrößenfraktion (B) 1,0-2,0 mm |
| 14,0 | Gew.-% | Polymerbindemittel auf Basis von Vinylacetat und Ethylen (Feststoff) |
| 16,0 | Gew.-% | Wasser |
| 100 | Gew.-% | |

Zur Herstellung von Leichtbauplatten wurden die vorstehend angegebenen Zusammensetzungen jeweils in eine Form eingefüllt, in die zuvor ein Armierungsgewebe mit einer Maschenweite von 4 mm x 5 mm eingelegt worden ist. Anschließend wurde der Forminhalt unter Einwirkung von Druck und Wärme (150°C) jeweils zu einer Platte mit einer Plattenstärke von 12 mm verpresst. Nach drei Tagen Lagerung unter Normalbedingungen, das heißt bei etwa 20°C, 1 atm Druck und 50% rel. Luftfeuchte, wurden die mechanischen Eigenschaften der Platten untersucht.

Die aus der Zusammensetzung gemäß dem Ausführungsbeispiel 1 hergestellten Leichtbauplatten wiesen folgende Eigenschaften auf (Mehrfachbestimmung):
- Raumgewicht nach DIN EN 1602:2013-05: 560 - 590 kg/m³
- Biegefestigkeit nach DIN EN ISO 178-2013: ca. 6,9 - 7,1 N/mm²
- Biegemodul nach DIN EN ISO 178-2013: ca. 1100 - 1120 N/mm²

Bei der Bestimmung der Bruchlast nach DIN EN ISO 10545-4:2019-06 war kein Bruchpunkt in der Kraft-Dehnungskurve erkennbar. D.h. der Plattenkern bricht nicht. Das Gewebe in der Zugzone nimmt die Kraft auf.

Die Biegefestigkeit nach DIN EN ISO 178-2013 entspricht der maximalen Biegespannung, die während der Prüfung von dem Probekörper ertragen wird. Das Biegemodul nach DIN EN ISO 178-2013 ist ein Maß für die Steifigkeit des Materials. Je höher das Biegemodul ist, desto steifer ist das Material.

Die Epoxidharz-gebundenen Platten aus der EP 3072859 B1 haben dagegen eine Biegezugfestigkeit im Bereich von 2,3 bis 2,8 N/mm².

Die aus der Zusammensetzung gemäß dem Ausführungsbeispiel 2 hergestellten Leichtbauplatten wiesen sehr ähnliche mechanische Eigenschaften, insbesondere im Hinblick auf die Biegefestigkeit und Steifigkeit auf, wie nachfolgende Werte zeigen:
- Raumgewicht nach DIN EN 1602:2013-05: 555 - 580 kg/m³
- Biegefestigkeit nach DIN EN ISO 178-2013: ca. 6,8 - 7,1 N/mm²
- Biegemodul nach DIN EN ISO 178-2013: ca. 1100 - 1130 N/mm²

Bei der Bestimmung der Bruchlast nach DIN EN ISO 10545-4:2019-06 war ebenfalls kein Bruchpunkt in der Kraft-Dehnungskurve erkennbar. D.h. der Plattenkern bricht nicht. Das Gewebe in der Zugzone nimmt die Kraft auf.

Beide Ausführungsbeispiele 1 und 2 weisen ein Brandverhalten von A2-s1, d0 nach EN 13501 auf.

Die aus der Zusammensetzung gemäß dem Referenzbeispiel 1 hergestellten Leichtbauplatten wiesen folgende Eigenschaften auf (Mehrfachbestimmung):
- Raumgewicht nach DIN EN 1602:2013-05: 540 - 570 kg/m³
- Biegefestigkeit nach DIN EN ISO 178-2013: ca. 6,1 - 6,6 N/mm²
- Biegemodul nach DIN EN ISO 178-2013: ca. 1170 - 1200 N/mm²

Die Bruchlast nach DIN EN ISO 10545-4:2019-06 betrug 240 - 270 N. Ein Bruchpunkt in der Kraft-Dehnungskurve war deutlich erkennbar. Danach wurde die Kraft vom Gewebe in der Zugzone übernommen.

Die aus der Zusammensetzung gemäß dem Referenzbeispiel 2 hergestellten Leichtbauplatten wiesen folgende Eigenschaften auf (Mehrfachbestimmung):
- Raumgewicht nach DIN EN 1602:2013-05: 440 - 460 kg/m³
- Biegefestigkeit nach DIN EN ISO 178-2013: ca. 5,2 - 5,8 N/mm²
- Biegemodul nach DIN EN ISO 178-2013: ca. 580 - 630 N/mm²

Bei der Bestimmung der Bruchlast nach DIN EN ISO 10545-4:2019-06 war kein Bruchpunkt in der Kraft-Dehnungskurve erkennbar. D.h., der Plattenkern bricht nicht. Das Gewebe in der Zugzone nimmt die Kraft auf. Die Leichtbauplatten zeigten ein geradezu elastisches Verhalten, das ihre Eignung als stabile Leichtbauplatte fragwürdig erscheinen lässt. Ferner kann das Brandverhalten A2-s1, d0 nach EN 13501 lange nicht erreicht werden.

Der Vergleich der aus der Zusammensetzung gemäß dem Ausführungsbeispiel 1 hergestellten Leichtbauplatten mit den aus der Zusammensetzung gemäß dem Referenzbeispiel 1 hergestellten Leichtbauplatten zeigt, dass die Bimodalität des enthaltenen Leichtfüllstoffs gemäß dem Ausführungsbeispiel 1 die Elastizität und die Bruchfestigkeit der Platten positiv beeinflusst.

Der Vergleich der aus der Zusammensetzung gemäß dem Ausführungsbeispiel 1 und 2 hergestellten Leichtbauplatten mit den aus der Zusammensetzung gemäß dem Referenzbeispiel 2 hergestellten Leichtbauplatten zeigt, dass der im Ausführungsbeispiel 1 und 2 enthaltene Feinfüllstoffanteil eine verstärkende Wirkung hat, ohne die Elastizitätseigenschaften der Platte allzu stark zu verschlechtern.

Auffallend war, dass bei den Leichtbauplatten, die aus den Zusammensetzungen gemäß der Referenzbeispiele hergestellt wurden, die Messwerte deutlich stärker streuten als bei den Leichtbauplatten, die aus den Zusammensetzungen gemäß der Ausführungsbeispiele hergestellt wurden.

## Patentansprüche

1. Zusammensetzung zur Herstellung einer Leichtbauplatte, enthaltend:
- 35-80 Gew.-%, vorzugsweise 40-75 Gew.-%, weiterhin vorzugsweise 45-70 Gew.-% eines Leichtfüllstoffs oder eines Leichtfüllstoffgemischs in multimodaler, beispielsweise in bimodaler, Partikelgrößenverteilung,
- 8-25 Gew.-%, vorzugsweise 10-24 Gew.-%, weiterhin vorzugsweise 12-22 Gew.-% eines Feinfüllstoffs oder eines Feinfüllstoffgemischs,
- 2-12 Gew.-%, vorzugsweise 3-10 Gew.-%, weiterhin vorzugsweise 4-8 Gew.-% eines, vorzugsweise als Feststoff vorliegenden, Polymerbindemittels oder Polymerbindemittelgemischs sowie
- 8 bis 24 Gew.-%, vorzugsweise 9-22 Gew.-%, weiterhin vorzugsweise 10-20 Gew.-% Wasser
jeweils bezogen auf das Gesamtgewicht der Ausgangsstoffe.

2. Zusammensetzung nach Anspruch 1,
**dadurch gekennzeichnet, dass** der enthaltene Leichtfüllstoff oder das enthaltene Leichtfüllstoffgemisch in mindestens zwei Größenfraktionen vorliegt, wobei die Partikelgröße in einer ersten Größenfraktion (A) 0,3-1,5 mm, vorzugsweise 0,4-1,2 mm, weiterhin vorzugsweise 0,5-1,0 mm und in einer zweiten Größenfraktion (B) 0,8-2,5 mm, vorzugsweise 0,9-2,2 mm, weiterhin vorzugsweise 1,0-2,0 mm beträgt.

3. Zusammensetzung nach Anspruch 2,
**dadurch gekennzeichnet, dass** der Anteil der ersten Größenfraktion (A) 20-40 Gew.-%, vorzugsweise 24-36 Gew.-%, weiterhin vorzugsweise 26-34 Gew.-%, und der Anteil der zweiten Größenfraktion (B) 20-40 Gew.-%, vorzugsweise 24-36 Gew.-%, weiterhin vorzugsweise 26-34 Gew.-% jeweils bezogen auf das Gesamtgewicht der Ausgangsstoffe der Zusammensetzung beträgt.

4. Zusammensetzung nach Anspruch 2 oder 3
**dadurch gekennzeichnet, dass** das Massen-Verhältnis der ersten Größenfraktion (A) zur zweiten Größenfraktion (B) 1:0,5 bis 1:2, vorzugsweise 1:0,7 bis 1:1,4, weiterhin vorzugsweise 1:1 beträgt.

5. Zusammensetzung nach einem der Ansprüche 2 bis 4,
**dadurch gekennzeichnet, dass** die erste Größenfraktion (A) eine mittlere Partikelgröße (D50) von 0,5-1,0 mm, vorzugsweise von 0,55-0,9 mm, weiterhin vorzugsweise von 0,6-0,8 mm aufweist und/oder die zweite Größenfraktion (B) eine mittlere Partikelgröße (D50) von 1,0-2,0 mm, vorzugsweise von 1,1-1,9 mm, weiterhin vorzugsweise von 1,2-1,8 mm aufweist.

6. Zusammensetzung nach einem der Ansprüche 2 bis 5,
**dadurch gekennzeichnet, dass** die erste Größenfraktion (A) eine Rohdichte nach EN 1097-6 < 800 kg/m³, vorzugsweise < 600 kg/m³, weiterhin vorzugsweise < 500 kg/m³ aufweist und/oder die zweite Größenfraktion (B) eine Rohdichte nach EN 1097-6 < 700 kg/m³, vorzugsweise < 500 kg/m³, weiterhin vorzugsweise < 400 kg/m³ aufweist.

7. Zusammensetzung nach einem der Ansprüche 2 bis 6,
**dadurch gekennzeichnet, dass** die erste Größenfraktion (A) eine Schüttdichte nach EN 1097-3 < 600 kg/m³, vorzugsweise < 500 kg/m³, weiterhin vorzugsweise < 300 kg/m³ aufweist und/oder die zweite Größenfraktion (B) eine Schüttdichte nach EN 1097-3 < 500 kg/m³, vorzugsweise < 400 kg/m³, weiterhin vorzugsweise < 250 kg/m³ aufweist.

8. Zusammensetzung nach einem der Ansprüche 2 bis 7,
**dadurch gekennzeichnet, dass** der enthaltene Leichtfüllstoff oder das enthaltene Leichtfüllstoffgemisch in mindestens einer weiteren Größenfraktionen (C, D) vorliegt, die feinteiliger als die Größenfraktion (A) und/oder grobteiliger als die Größenfraktion (B) ist.

9. Zusammensetzung nach Anspruch 8,
**dadurch gekennzeichnet, dass** der Anteil der mindestens einen weiteren Größenfraktion (C, D) weniger als 25 Gew.-%, vorzugsweise weniger als 20 Gew.-%, weiterhin vorzugsweise weniger als 10 Gew.-% bezogen auf das Gesamtgewicht des in der Zusammensetzung enthaltenen Leichtfüllstoffs oder der in der Zusammensetzung enthaltenen Leichtfüllstoffmischung beträgt.

10. Zusammensetzung nach einem der vorhergehenden Ansprüche,
**dadurch gekennzeichnet, dass** Blähglas, Blähton, Blähschiefer, geschäumtes Blähglas, Blähglasgranulate, Blähperlite, Blähglimmer, insbesondere geblähtes oder geschäumtes Vermiculit, Hohlglaskugeln, Hohlkeramikkugeln, Lavaschlacke, Tuff und/oder Bims als Leichtfüllstoff enthalten ist bzw. sind.

11. Zusammensetzung nach einem der vorhergehenden Ansprüche,
**dadurch gekennzeichnet, dass** ein silikatischer, karbonatischer, oxidischer, hydroxidischer und/oder sulfatischer Füllstoff, beispielsweise Quarz, Cristobalit, Perlit, insbesondere Rohperlit, Ettringit, Calciumcarbonat, Calcit, Kalkstein, Marmor, Dolomit, Aluminiumhydroxid und/oder Erdalkalisulfate, als Feinfüllstoff enthalten ist bzw. sind.

12. Zusammensetzung nach einem der vorhergehenden Ansprüche,
**dadurch gekennzeichnet, dass** der enthaltene Feinfüllstoff oder die enthaltene Feinfüllstoffmischung eine mittlere Partikelgröße (D50) von 1-100 µm, vorzugsweise 2-60 µm, weiterhin vorzugsweise von 4-40 µm aufweist.

13. Zusammensetzung nach einem der vorhergehenden Ansprüche,
**dadurch gekennzeichnet, dass** ein überwiegender Teil des enthaltenen Feinfüllstoffs oder der enthaltenen Feinfüllstoffmischung eine Mohshärte ≤4, vorzugsweise ≤ 3,5, aufweist.

14. Zusammensetzung nach einem der vorhergehenden Ansprüche,
**dadurch gekennzeichnet, dass** der enthaltene Feinfüllstoff oder die enthaltene Feinfüllstoffkombination zumindest in Teilen einen negativen PCS-Wert, vorzugsweise eine PCS-Wert < -0,5 MJ/kg, weiterhin vorzugsweise einen PCS-Wert < -0,8 MJ/kg, aufweist.

15. Zusammensetzung nach einem der vorhergehenden Ansprüche,
**dadurch gekennzeichnet, dass** ein Polymerbindemittel auf Basis von Vinylacetat/Ethylen-Copolymeren, ein Copolymer auf Basis von Vinylaromaten, insbesondere Styrol, und Acrylaten und/oder ein Copolymer auf Basis von Reinacrylaten als Polymerbindemittel enthalten ist, vorzugsweise ein Polymerbindemittel enthalten ist, bei dem die in Wasser dispergierten oder dispergierbaren Polymere aus gleichen oder verschiedenen Monomeren gebildet sind, wobei mindestens ein Monomer ein Acrylsäureester, Methacrylsäureester, Acrylsäure, Methacrylsäure, Vinylacetat, Vinylchlorid, Versatat, Acrylnitril oder eine vinylaromatische Verbindung darstellt, weiterhin vorzugsweise ein Copolymer aus Vinylacetat und Ethylen als Polymerbindemittel enthalten ist.

16. Verfahren zur Herstellung einer Leichtbauplatte unter Verwendung einer Zusammensetzung nach einem der vorhergehenden Ansprüche,
wobei zur Herstellung der Zusammensetzung die folgenden Schritte ausgeführt werden:
a) Vorlegen eines Leichtfüllstoffs oder einer Leichtfüllstoffmischung in mindestens zwei unterschiedlichen Größenfraktionen (A, B, C, D),
b) Mischen der Größenfraktionen (A, B, C, D) unter Zugabe von Wasser,
c) Zugabe eines Polymerbindemittels oder einer Polymerbindemittelmischung, vorzugsweise in Pulverform,
d) Zugabe eines Zements oder einer Zementmischung,
e) Mischen der Ausgangsstoffe,
und wobei zur Herstellung der Leichtbauplatte die Zusammensetzung in eine Form eingefüllt und in der Form unter Einwirkung von Druck und Wärme zu einer Platte verpresst wird.

17. Verfahren nach Anspruch 16,
**dadurch gekennzeichnet, dass** die Zusammensetzung in der Form bei einer Temperatur von 80-160°C verpresst wird.

18. Verfahren nach Anspruch 16 oder 17,
**dadurch gekennzeichnet, dass** die Zusammensetzung in der Form mit einem Kompressionsfaktor von 50-75% verpresst wird.

19. Verfahren nach einem der Ansprüche 16 bis 18,
**dadurch gekennzeichnet, dass** zumindest eine Oberfläche der Leichtbauplatte mit einem Armierungsgewebe kaschiert wird, wobei vorzugsweise ein Armierungsgewebe mit einem Flächengewicht > 110 g/m² und/oder einer maximalen Maschenweite kleiner 8 mm x 8 mm, vorzugsweise kleiner 6 mm x 6 mm, weiterhin vorzugweise kleiner 5 mm x 6 mm, verwendet wird.
